# EUROPEAN PATENT SPECIFICATION

(11) **EP 3 337 257 B1**
(45) Date of publication and mention of the grant of the patent: **28.09.2022**
(21) Application number: 16835096.5
(22) Date of filing: 05.08.2016
(51) Int. Cl.: H04W 72/12, H04W 16/14, H04W 74/08

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(30) Priority: 13.08.2015 JP 2015159944
(43) Date of publication of application: 20.06.2018
(73) Proprietor: NTT DOCOMO, INC., Chiyoda-ku Tokyo 100-6150 (JP)
(72) Inventor: HARADA, Hiroki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2016/073142
(87) International publication number: WO 2017/026399

(56) References cited:
- US-A1- 2014 362 780
- ETRI: "Discussion on the UL timing for LAA", 3GPP DRAFT; R1-153000-DISCUSSION ON THE UL TIMING FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973610, Retrieved from the Internet: URL:http://www.3gpp.org/ftp/Meetings_3GPP_ SYNC/RAN1/Docs/ [retrieved on 2015-05-24]
- ALCATEL-LUCENT SHANGHAI BELL ET AL: "LBT and Frame Structure Design for LAA with DL and UL", 3GPP DRAFT; R1-152990-LBT-UL - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973492, Retrieved from the Internet: URL:http://www.3gpp.org/ftp/Meetings_3GPP_ SYNC/RAN1/Docs/ [retrieved on 2015-05-24]
- MOTOROLA MOBILITY: 'Further Discussions on Physical Layer options for LAA-LTE' RL-153183, 3GPP 16 May 2015, XP050973404
- ZTE: 'Remaining Issues on LAA UL' RL-152971, 3GPP 16 May 2015, XP050971565
- QUALCOMM INCORPORATED UPLINK CONSIDERATIONS FOR LAA-LTE, R2-152703 16 May 2015, XP050971913
- ERICSSON DROPPING OF INITIAL UL HARQ TRANSMISSION IN LAA, R2-152482, 3GPP 15 May 2015, XP050972204
- ETRI: "Discussion on the UL transmission for LAA and the potential solution thereof", 3GPP DRAFT; R1-152094-DISCUSSION ON THE UL TRANSMISSION FOR LAA AND THE POTENTIAL SOLUTION THEREOF, 3RD GENERATION PARTNERSHIP PROJECT (3GPP), MOBILE COMPETENCE CENTRE ; 650, ROUTE DES LUCIOLES ; F-06 , vol. RAN WG1, no. Belgrade, Serbia; 20150420 - 20150424 19 April 2015 (2015-04-19), XP050934942, Retrieved from the Internet: URL:http://www.3gpp.org/ftp/Meetings_3GPP_ SYNC/RAN1/Docs/ [retrieved on 2015-04-19]

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). The specifications of LTE-advanced (Rel. 10 to 12) have been drafted for the purpose of achieving further broadbandization and higher speeds beyond LTE, and, in addition, for example, a successor system of LTE -- referred to as "5G" (5th generation mobile communication system) -- is under study.

In LTE of Rel. 8 to 12, the specifications have been drafted assuming exclusive operations in frequency bands that are licensed to operatorsthat is, licensed bands. As licensed bands, for example, 800 MHz, 2 GHz and/or 1.7 GHz are used.

User traffic has been increasing steeply following the spread of high-performance user terminals/user equipment (referred to as "UE") such as smart-phones and tablets. Although more frequency bands need to be added to meet this increasing user traffic, licensed bands have limited spectra (licensed spectra). Consequently, a study is in progress to enhance the frequencies of LTE systems by using bands of unlicensed spectra (hereinafter referred to as "unlicensed bands") that are available for use apart from licensed bands (see non-patent literature 2).

For unlicensed band, for example, 2.4 GHz, which is the same as in Wi-Fi (registered trademark), or the 5 GHz band and/or the like may be used. With Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). In the future, dual connectivity (DC) between licensed bands and unlicensed bands and stand-alone in unlicensed bands may become the subject of study under LAA.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2"
Non-Patent Literature 2: AT&T, Drivers, Benefits and Challenges for LTE in Unlicensed Spectrum, 3GPP TSG-RAN Meeting #62 RP to 131701

ETRI: "Discussion on the UL timing for LAA", May 24, 2015 relates to Licensed-Assisted Access to unlicensed spectrum as a complementary tool to augment the service offering in unlicensed spectrum. The document discusses required functionalities and possible alternatives of frame structures offering the UL data transmission in unlicensed spectrum, including potential solution with re-arrangement of subframes.

### Summary of Invention

### Technical Problem

A study is in progress to introduce interference control functionality to unlicensed bands, in order to allow co-presence with other operators' LTE, Wi-Fi or different systems. In Wi-Fi, LBT (Listen Before Talk), which is based on CCA (Clear Channel Assessment), is used as an interference control function within the same frequency. Consequently, when unlicensed bands are configured in LTE systems, UL transmission and/or DL transmission may be controlled by implementing "listening" (for example, LBT) as an interference control function.

Furthermore, even when UL transmission and/or DL transmission are controlled by employing listening, user terminals might control UL transmission (for example, UL data) based on UL transmission commands (for example, UL grants) that are reported from radio base stations. In this case, if the UL transmission methods (for example, UL transmission timings) of existing systems (Rel. 12 and earlier versions) are applied on an as-is basis, there is a threat of disabling adequate UL transmission depending on the result of listening.

The present invention has been made in view of the above, and it is therefore an object of the present invention to provide a user terminal, a radio base station and a radio communication method that allow adequate UL transmission in cells (for example, unlicensed bands) where listening is executed prior to transmission.

### Solution to Problem

The object of the invention is achieved by the subject-matter of the independent claims. Advantageous embodiments are defined in the dependent claim.

### Advantageous Effects of Invention

According to the present invention, UL transmission can be carried out adequately in cells (for example, unlicensed bands) where listening is executed prior to transmission.

### Brief Description of Drawings

FIG. 1A is a diagram to show an example of an FBE radio frame configuration, and FIG. 1B is a diagram to show an example of an LBE radio frame configuration;
FIG. 2 is a diagram to show examples of a burst period that is configured for transmission after DL-LBT;
FIG. 3A is a diagram to show an example of an existing TDD subframe configuration, and FIG. 3B is a diagram to show an example of a subframe configuration in LAA;
FIG. 4 is a diagram to show examples of transmission methods for use when listening is executed prior to DL transmission;
FIG. 5A is a diagram to show examples of UL transmission timings in an existing system, and FIG. 5B is a diagram to show an example in which existing UL transmission timing is applied to LBE;
FIG. 6A and FIG. 6B are diagrams to show examples of UL transmission timings;
FIG. 7A and FIG. 7B are diagrams to show other examples of UL transmission timings;
FIG. 8 is a diagram to show other examples of UL transmission timings;
FIG. 9 is a diagram to show examples of UL transmission methods (UL TTI structure);
FIG. 10 is a diagram to show an example of allocation of uplink control information to an uplink shared channel;
FIG. 11 is a schematic diagram to show an example of a radio communication system;
FIG. 12 is a diagram to explain an overall structure of a radio base station;
FIG. 13 is a diagram to explain a functional structure of a radio base station;
FIG. 14 is a diagram to explain an overall structure of a user terminal; and
FIG. 15 is a diagram to explain a functional structure of a user terminal.

### Description

As mentioned earlier, in unlicensed bands, interference control functionality is necessary in order to allow co-presence with other operators' LTE, Wi-Fi (registered trademark), or different systems. In Wi-Fi, the function called "LBT" (Listen Before Talk), which is based on CCA, is implemented as an interference control function for use within the same frequency. In Japan and Europe, the LBT function is stipulated as mandatory in systems that are run in the 5 GHz unlicensed band, such as Wi-Fi.

Consequently, a study is in progress to apply interference control within the same frequency by executing listening before transmitting signals even in systems where LTE/LET-A is run in unlicensed bands (for example, LAA systems). In a carrier in which listening is configured, radio base stations and user terminals of a plurality of systems may use the same frequency bands on a shared basis.

The application of listening makes it possible to prevent interference between LAA and Wi-Fi, interference between LAA systems, and so on. Furthermore, even when user terminals that can be connected are controlled independently for every operator that runs an LAA system, it is possible to reduce interference without learning the details of each operator's control, by means of listening.

Here, "listening" refers to the operation which a given transmission point (for example, a radio base station, a user terminal, etc.) performs before transmitting signals in order to check whether or not signals to exceed a predetermined level (for example, predetermined power) are being transmitted from other transmission points. Also, this "listening" performed by radio base stations and/or user terminals may be referred to as "LBT" (Listen Before Talk), "CCA" (Clear Channel Assessment), "carrier sensing" and so on.

For example, when LBT is employed in an LTE system, a transmission point (an LTE-U base station and/or a user terminal) performs listening (LBT, CCA) before transmitting UL signals and/or DL signals in an unlicensed band. Then, if no signals from other systems (for example, Wi-Fi) and/or other LAA transmission points are detected, the transmission point carries out communication in the unlicensed band.

If received power that is equal to or lower than a predetermined threshold is measured in LBT, the transmission point judges that the channel is in the idle state (LBT_idle), and carries out transmission. When a "channel is in the idle state," this means that, in other words, the channel is not occupied by a certain system, and it is equally possible to say that the channel is "idle," the channel is "clear," the channel is "free," and so on.

On the other hand, when the received power that is measured in LBT exceeds a predetermined threshold, the transmission point judges that the channel is in the busy state (LBT_busy), and limits transmission. Procedures that are taken when listening yields the result "LBT-busy" include (1) making a transition to another carrier by way of DFS (Dynamic Frequency Selection), (2) applying transmission power control (TPC), (3) holding transmission (stopping transmission or waiting for transmission), and so on. In the event LBT_busy is yielded, LBT is carried out again with respect to this channel, and the channel becomes available for use only after it is confirmed that the channel is in the idle state. Note that the method of judging whether a channel is in the idle state/busy state based on LBT is by no means limited to this.

For example, assume a case where, when a user terminal that communicates by using a carrier (which may also be referred to as a "frequency") of an unlicensed band detects another entity (another user terminal and/or the like) that is communicating in this unlicensed band carrier, transmission is banned in this carrier. In this case, this user terminal executes LBT at a timing that is a predetermined period ahead of a transmission timing. By executing LBT, the user terminal searches the whole band of the applicable carrier at a timing that is a predetermined period ahead of a transmission timing, and checks whether or not other devices (radio base stations, LAA-UEs, Wi-Fi devices and so on) are communicating in this carrier's band. Only if it is confirmed that no such communication is in progress, is transmission carried out using this carrier. On the other hand, if only just a portion of the band is detected to be used by another device -- that is, if the received power of a signal from another device entering this band exceeds a threshold -- the user terminal stops its transmission. Here, if the received signal power in the LBT period is higher than a predetermined threshold, the channel is judged to be in the busy state (LBTbusy). If the received signal power in the LBT period is lower than the predetermined threshold, the channel is judged to be in the idle state (LBTidle).

Also, there are roughly two types of LBT mechanisms -- namely, LBE (Load-Based Equipment) and FBE (Frame-Based Equipment). With LBE, initial CCA is executed, and transmission is started if LBT-idle is yielded, or the ECCA (extended CCA) procedure is executed if LBT-busy is yielded. That is, LBE refers to a mechanism of extending the carrier sensing duration when the result of carrier sensing shows that the channel cannot be used, and continuing executing carrier sensing until the channel becomes available for use. In LBE, random backoff is required to avoid contention adequately.

FBE executes carrier sensing in fixed timings and in a fixed cycle, and starts transmission if LBT-idle is yielded, or waits until the next carrier sensing timing if LBT-busy is yielded. That is, FBE has a fixed frame cycle, and is a mechanism of carrying out transmission if the result of executing carrier sensing in a predetermined frame shows that the channel is available for use, and not making transmission but waiting until the next carrier sensing timing if the channel cannot be used.

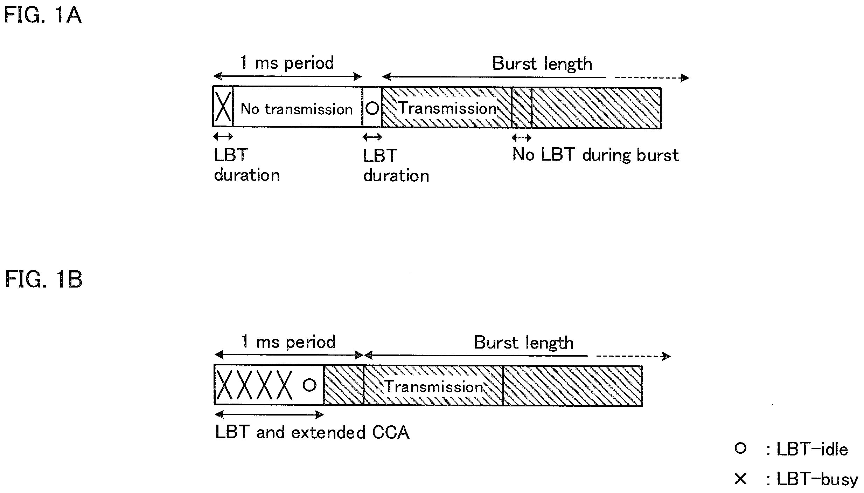

FIGs. 1 provide diagrams, each showing an example of a radio frame configuration in LBT. FIG. 1A shows an example of an FBE radio frame configuration. In the event of FBE, the LBT duration and the LBT cycle are fixed, and LBT is performed in a predetermined number of symbols (for example, one to three symbols) and a cycle (for example, every 1 ms). Meanwhile, FIG. 1B shows an example of an LBE radio frame configuration. In the event of LBE, the LBT duration is not fixed. For example, LBT symbols may continue until a predetermined condition is fulfilled. To be more specific, a radio base station may continue executing LBT until LBT-idle is observed. Note that, although the present embodiment can be suitably applied to LBE, which controls UL transmission by continuing executing carrier sensing until a channel becomes available for use, this is by no means limiting.

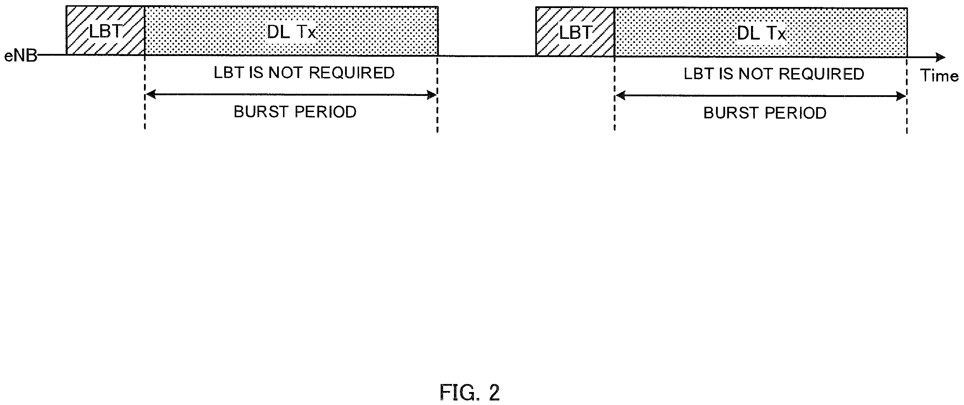

When the result of listening for DL transmission (DL-LBT) which a radio base station executes shows LBT-idle, the radio base station is allowed to skip LBT and transmit signals (DL burst transmission) for a predetermined period (see FIG. 2). In cells where listening is employed, the period after listening (after LBT-idle is yielded) in which transmission can be made without executing LBT is referred to as the "burst period" (also referred to as the "burst transmission period," "burst length," "maximum burst length," "maximum possible burst length" and so on). In UL transmission, too, UL burst transmission can be carried out based on listening (UL-LBT) results, as in DL transmission.

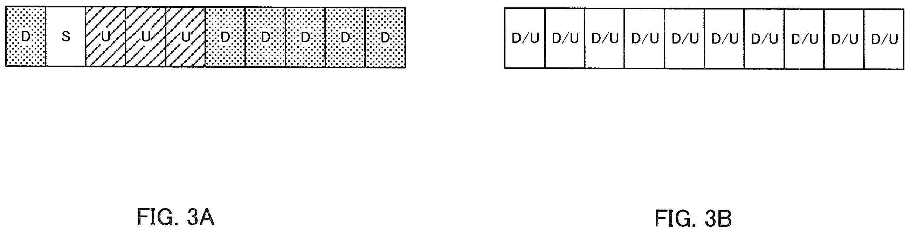

Also, when DL transmission and UL transmission are supported in the same unlicensed carrier (DL/UL LAA), DL burst transmission and UL burst transmission can be time-division-multiplexed (TDM) and scheduled. In TDD in existing LTE systems, the arrangement pattern of DL subframes and UL subframes is configured on a fixed basis (see FIG. 3A). By contrast with this, DL/UL LAA may flexibly time-multiplex DL burst transmission and UL burst transmission and control transmission, without fixing DL burst transmission and UL burst transmission (see FIG. 3B).

Now, when LBE is employed, the timing to start transmission, which is determined based on the result of listening (LBT-idle), is not always the boundary between subframes. Note that in LTE systems (Rel. 8 to 10) in which listening is not employed, subframes are equivalent to transmission time intervals (TTIs).

That is, depending on the result of listening (the timing to yield LBTidle), cases might occur where the number of OFDM symbols within one subframe that can be used for transmission does not match the number of all OFDM symbols in this subframe (that is, the case where only part of the OFDM symbols can be used). In this case, it may be possible to make DL transmission by using part of the OFDM symbols, from the perspective of spectral efficiency and reducing the loss of transmission opportunities.

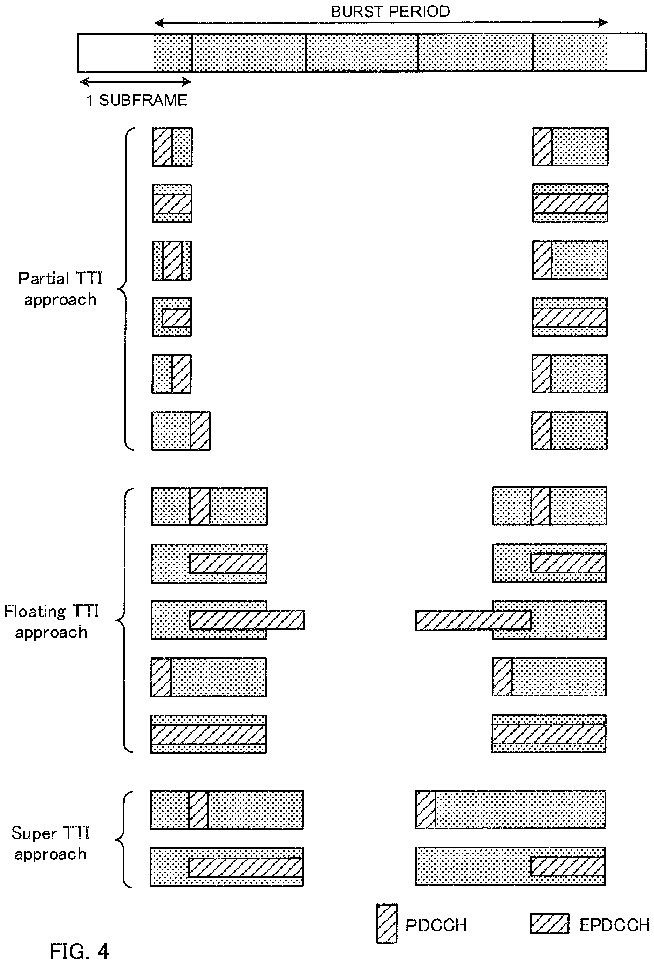

To make DL transmission when only part of the OFDM symbols in a subframe can be used, a plurality of transmission modes (transport block (TB) transmission methods) may be possible. DL transmission here includes the transmission of DL data (for example, the PUSCH), DL control information, reference signals and so on. Now, as transmission modes, a partial TTI approach, a floating TTI approach and a super TTI approach will be described below with reference to FIG. 4.

### <Partial TTI approach >

In the partial TTI approach, DL data allocation (transport block) is constituted by using part of the OFDM symbols in a single subframe. For example, to start DL transmission in the middle of a subframe based on the result of listening, DL data (for example, the PDSCH) and control signals (for example, the PDCCH and/or the EPDCCH) are transmitted by using partial OFDM symbols up to the boundary to the next subframe.

### <Floating TTI approach >

In the floating TTI approach, DL data allocation (transport block) is constituted by a TTI unit (which is, for example, 1-ms long) that starts from the transmission-starting timing determined based on the result of listening. For example, when transmission is started from the middle of a subframe n, DL transmission is controlled in a TTI unit that extends over to the next subframe n+1. In this case, the DL transmission is carried out by forming one TTI with part of the OFDM symbols in subframe n and part of the OFDM symbols in subframe n+1.

### <Super TTI approach >

In the super TTI approach, DL data allocation (transport block) is constituted by using OFDM symbols, which cover, in addition to the subframe of the transmission-starting timing, the whole of the next subframe. For example, when transmission started from the middle of a subframe n, DL transmission is controlled by using part of the OFDM symbols in this subframe n and all the OFDM symbols in the next subframe n+1 as one transport block.

Among the above three transmission modes, in the floating TTI approach, the TTI length is fixed (for example, 14 OFDM symbols), so that the transport block size can be fixed even when the timing of transmission changes with listening results. Consequently, when DL signals are transmitted, it is possible to mitigate the limitations that apply to retransmission such as the timing. Also, in the floating TTI approach, the TTI length is fixed regardless of the transmission-starting timing (the number of OFDM symbols that can be used), so that it is possible to reduce the number of signal transmission patterns that have to be prepared in advance on the transmitting end. Furthermore, it is possible to configure the structure of reference signals, control channels and so on that are included in a TTI the same as in existing systems (that is, configure the signal configuration in one TTI as heretofore).

In this way, with regard to DL transmission, DL burst transmission methods for use when transmission starts in the middle of a subframe due to the result of listening are under study. By contrast with this, when UL transmission (UL burst transmission) is carried out by employing listening, how to control the UL transmission timing is the problem.

When listening is executed before UL signals are transmitted, a user terminal might control UL transmission based on UL transmission commands (for example, UL grants) from a radio base station and the result of listening. If, in this case, a UL transmission method (for example, UL transmission timing) of an existing system that does not execute listening is applied, there is a threat of disabling adequate UL transmission depending on the result of listening and/or the like.

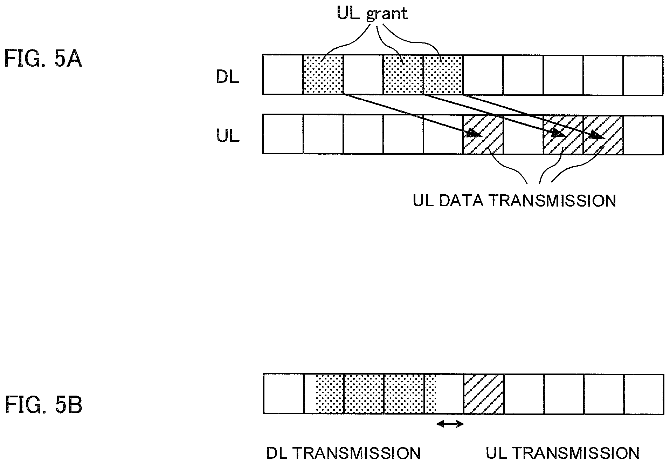

Assuming an existing system, a user terminal makes UL transmission in a subframe a predetermined timing after (for example, 4 ms after) a UL transmission command transmitted from a radio base station arrives (see FIG. 5A). If this transmission method is applied on an as-is basis, the user terminal may execute listening immediately before the target subframe that is specified by a UL transmission command (that is, the subframe 4 ms after the UL transmission command), and not execute UL transmission outside this specified subframe.

However, when LBE is employed, DL transmission starts and/or ends in parts that do not meet subframe boundaries. Consequently, when UL transmission in a specific subframe is commanded to a user terminal by using a UL grant, a period in which no transmission is carried out is produced between DL transmission and UL transmission (see FIG. 5). There is even a possibility that, depending the timing of DL transmission, the non-transmission period to be produced between DL transmission and UL transmission becomes longer than the listening period that is needed for UL transmission. Additional threats in this case include a decrease in spectral efficiency, loss of transmission opportunities (channel access right) in user terminals due to transmission from other systems, and so on.

Furthermore, regarding UL transmission, if transmission from the middle of a subframe is allowed, applying transmission methods of existing systems only makes it difficult for user terminals to control UL transmission flexibly based on the result of listening.

So, assuming the case where it is allowed to transmit a DL signal and/or an UL signal from the middle of a subframe, the present inventors have come up with the idea of controlling a user terminal to transmit a UL signal within a predetermined period after the user terminal receives a UL transmission command (for example, in a second period that is configured after the first period).

According to the present invention, by allowing a UL transmission timing to be placed in a certain range (second period) that is configured a predetermined period (first period) after UL transmission is commanded, a user terminal can adequately control the UL transmission timing even when a DL signal and/or a UL signal are transmitted from the middle of a subframe. Furthermore, the user terminal can control UL transmission flexibly based on the result of listening that is executed before UL transmission.

Also, assuming the case where UL transmission is started from the middle of a subframe based on the result of listening, the present inventors have come up with the idea of controlling the TTI structure in which UL signals are transmitted. Furthermore, assuming the case where UL burst transmission is carried out, the present inventors have come up with the idea of controlling transmission by placing an initial signal, which includes a preamble, at the top of a UL TTI.

Now, the present example will be described in detail below with reference to the accompanying drawings. Although the present example will be described assuming that a frequency carrier in which listening (LBT) is not configured is a licensed band and a frequency carrier in which listening is configured is an unlicensed band, this is by no means limiting. The present example is applicable to any carriers (or cells) in which listening is configured, regardless of whether this carrier is a licensed band or an unlicensed band.

Also, although cases will be shown in the following description where listening is applied to LTE/LTE-A systems, the present example is by no means limited to this. The present example is applicable to any systems in which listening is executed before signals are transmitted, and in which UL transmission (for example, transmission timing) is controlled based on commands from other transmission points (for example, radio base stations).

Also, although cases will be described in the following description where, as UL transmission, the transmission of UL data (for example, the PUSCH) is controlled based on UL transmission commands (UL grants) from radio base stations, the present embodiment is by no means limited to this. The present disclosure is applicable to other UL transmissions (for example, ACK/NACK feedback, aperiodic channel state information (A-CSI) feedback, aperiodic sounding reference signal (A-SRS) feedback, and so on).

Furthermore, although the following description will presume cases where a floating TTI is applied to UL transmission and/or DL transmission in which listening is executed, the present embodiment is by no means limited to this, other modes of transmission are equally applicable.

### (First Example)

UL transmission control over transmission timings in response to UL transmission commands (for example, UL grants) reported from radio base stations and so on will be described with the first example.

When it is allowed to transmit a DL signal and/or a UL signal from the middle of a subframe based on the result of listening, a user terminal is controlled to transmit a UL signal within a predetermined period (second period) that is configured a predetermined period (first period) after a UL transmission command is received. Now, cases will be described below in which a floating TTI is applied to UL transmission and/or DL transmission.

### <When floating TTI is used in UL transmission>

When a user terminal makes UL transmission by using a floating TTI, the user terminal controls UL transmission in a TTI unit from the middle of a subframe. When DL transmission to include a UL transmission command arrives in one predetermined subframe n, the user terminal can make UL transmission, based on the result of listening, within a predetermined period following the timing (subframe n) the UL transmission command is received.

A radio base station may report a UL transmission command (UL grant) to a user terminal by including the UL transmission command in a DL signal that is transmitted from another cell (unlicensed band or licensed band) (cross carrier scheduling).

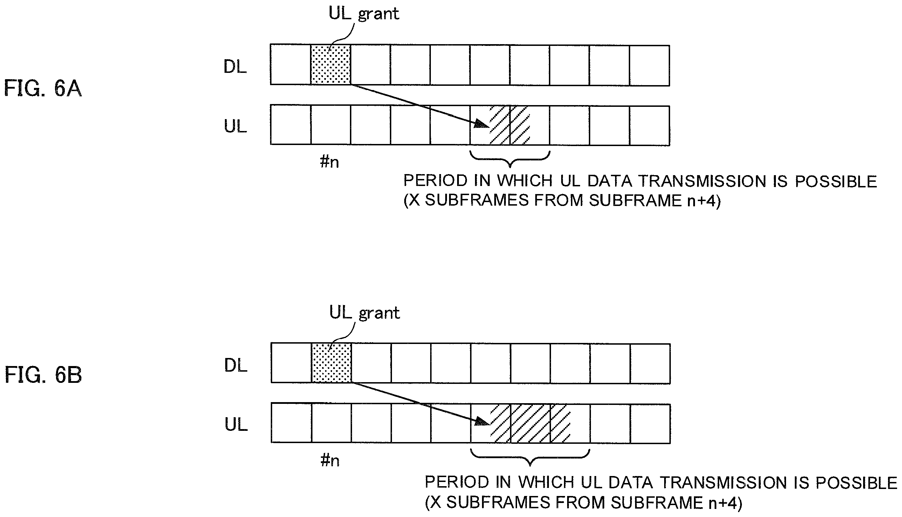

For example, starting from subframe n+4 (meaning that the predetermined period is 4 ms), the user terminal controls the transmission of UL signals for a period of X subframes (a period of X subframes from subframe n+4) (see FIG. 6A). FIG. 6A show a case where X=2. Note that, although a case is illustrated here in which the top timing of a candidate UL transmission period (second period) to allow UL transmission is at n+4, this is by no means limiting, and n+3, n+5 and others may be used as well.

The value (X) to determine the length of a candidate UL transmission period may be set forth in advance in the specification, or may be reported from the radio base station to the user terminal by using higher layer signaling (for example, RRC signaling, broadcast information and so on). The user terminal can know the period in which UL transmission in response to the UL transmission command can be made, and control UL transmission accordingly.

The user terminal can carry out maximum one TTI length of UL transmission in the period of X subframes, which serves as a candidate UL transmission period (see FIG. 6A).

Alternatively, the user terminal may carry out multiple TTI lengths of UL transmission in the period of X subframes (see FIG. 6B). In this case, the radio base station schedules UL transmission to match multiple TTIs in the user terminal (UL multi-subframe scheduling). Also, the radio base station can report UL transmission commands for multiple subframes to the user terminal by using downlink control information and/or higher layer signaling. FIG. 6 shows a case where two subframes of UL transmission is carried out when X=3. By this means, it is possible to reduce the number of times to execute listening when making UL transmission in multiple TTIs.

When the user terminal is unable to make transmission during the period of X subframes, which serves as a candidate UL transmission period, due to the result of listening (when LBT-busy continues), the user terminal may be controlled not to carry out (or to "drop") UL transmission. By this means, the user terminal does not have to execute listening certain period (candidate UL transmission period). To be more specific, referring to the example of FIG. 6A, although, during the period of subframe n+4, LBT-idle is yielded and listening continues being executed until the backoff counter value becomes zero, if UL transmission cannot be started by the beginning of subframe n+5, from this point, it is no longer possible to accommodate one TTI of transmission within the X-subframe period, so that listening can be stopped here. As a result of this, it is possible to reduce the listening operation of the user terminal when the channel is heavy, and reduce the increase of power consumption. Furthermore, the user terminal may retain the UL data which the user terminal has prepared for UL transmission until a UL transmission command is received again, or may discard this.

### <When floating TTI is used in DL transmission >

When DL transmission to include a UL transmission command is sent over a plurality of subframes, a user terminal can make UL transmission in a certain period beginning from the subframe a predetermined period after a specific subframe among a plurality of subframes.

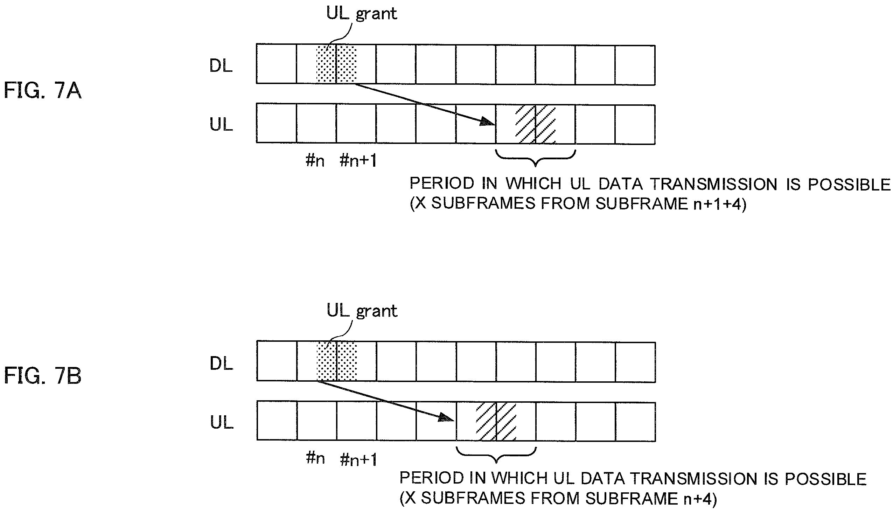

A case will be assumed here in which a radio base station transmits a DL signal (a transport block of one TTI), in which a UL transmission command is included, over subframe n and subframe n+1. In this case, a user terminal can control the timing of UL transmission with reference to the timing where the subframe period to contain the UL transmission command ends (subframe n+1). For example, the user terminal carries out UL transmission in a certain period (a period of X subframes from subframe n+1+4) that starts from the subframe (subframe n+1+4) a predetermined period (for example, 4 ms) after subframe n+1 (see FIG. 7A).

Alternatively, the user terminal may control the timing of UL transmission with reference to the timing (subframe n) where the subframe period to contain the UL transmission command starts. For example, the user terminal carries out UL transmission in a certain period (a period of X subframes from subframe n+4) that starts from the subframe (subframe n+4) a predetermined period (for example, 4 ms) after subframe n (see FIG. 7B).

Note that, when multiple subframes are configured as a candidate UL transmission period (X), the user terminal may configure the UL transmission timing in the middle of a subframe, or in a subframe boundary part (UL transmission in a subframe unit). Also, when UL transmission is made during the DL burst period, the user terminal may control the UL transmission (transmission timing and so on) without executing listening prior to the UL transmission.

Alternatively, the user terminal may control UL transmission by placing the UL transmission timing only in a certain period that comes a predetermined period after a DL floating TTI to contain a UL transmission command, or only a after a predetermined period. For example, assume a case where the radio base station transmits a DL signal (a transport block of one TTI) to contain a UL transmission command over subframe n and subframe n+1.

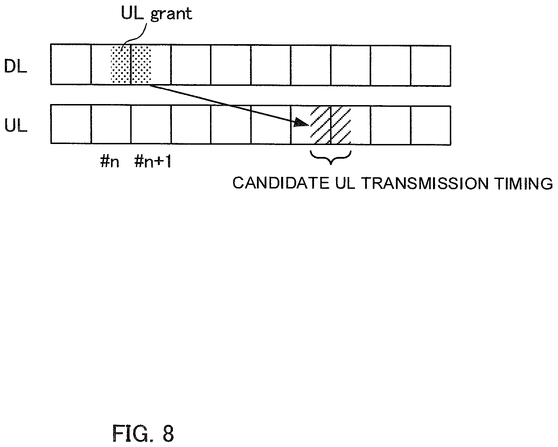

In this case, the user terminal can make the timing (for example, the OFDM symbol at subframe n+1+4) a predetermined period (for example, 4 ms) after the timing the subframe period to contain the UL transmission command ends (subframe n+1) a candidate UL signal transmission timing (see FIG. 8). Alternatively, the user terminal can make the timing (for example, the OFDM symbol at subframe n+4) a predetermined period (for example, 4 ms) after the timing the subframe period to contain the UL transmission command begins (subframe n) a candidate UL signal transmission timing (see FIG. 8).

Also, the user terminal can synchronize UL transmission with subframes (subframe timings), and control UL transmission using only predetermined subframes as candidate UL transmission timings. Note that, if the user terminal is also connected with another cell (for example, a cell to use a licensed band (PCell, PSCell and so on)), subframes (subframe timings) can assume the timings of subframes that are configured in synchronization with the other cell.

### (Second Example)

The structure of UL TTIs (UL subframes) that are transmitted based on the result of listening will be described with a second example.

As mentioned earlier, when it is allowed to make UL transmission from the middle of a subframe (for example, a UL floating TTI) based on the result of listening, the problem lies in how to configure the TTI structure in UL transmission. With the present example, the transmission method (UL TTI structure) for use when a floating TTI is used will be described.

### <Transmission method 1 >

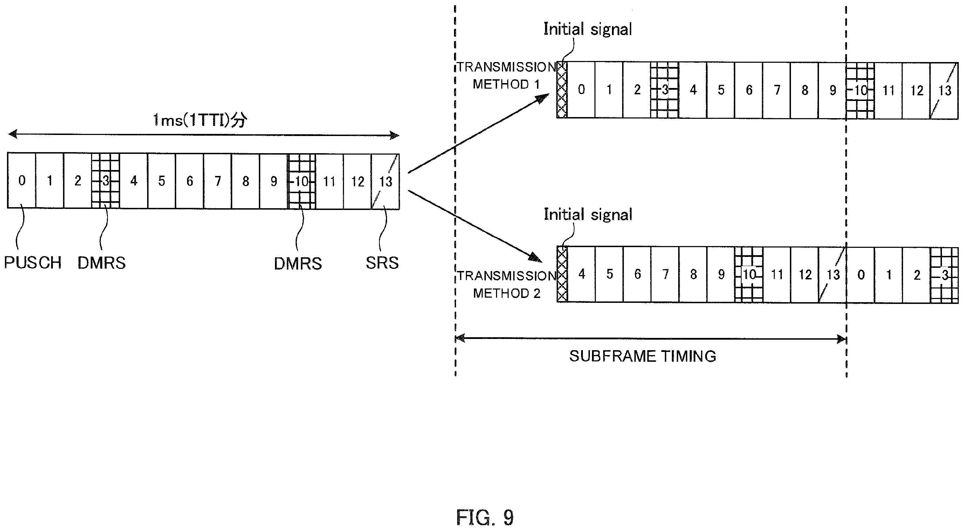

A UL TTI structure can be configured the same as the normal TTI structure regardless of the actual transmission-starting timing in a candidate UL transmission period (see transmission method 1 of FIG. 9). The normal TTI structure refers to the structure/arrangement UL signals and/or UL channels, configured when UL transmission is carried out based on subframe timings (when UL transmission is carried out from the top of subframes).

For example, when a user terminal makes UL transmission from the middle of a subframe, the user terminal uses the UL TTI structure for use when making UL transmission without executing listening (as in existing systems, licensed bands and so on). In this case, regardless of the timing the transmission is started, the symbol is made the top symbols in the normal TTI structure (for example, symbol #0).

### <Transmission method 2 >

Alternatively, it is possible to define a UL TTI structure by using relative locations with respect to a subframe boundary, on a fixed basis, regardless of the actual timing transmission starts in a candidate UL transmission period (see transmission method 2 of FIG. 9). In this case, a user terminal uses cyclic-shift transmission in accordance with transmission-starting timings.

For example, when the timing to start UL transmission corresponds to the fourth symbol in the subframe timing, the top symbol is made the fourth symbol of the normal TTI structure (for example, symbol #4). By this means, it is possible to arrange reference signals (for example, the demodulation reference signal, the sounding reference signal and so on), in predetermined locations in subframes regardless of the transmission-starting timing.

Also, when transmission method 1 or transmission method 2 are employed, it is possible to configure a signal that contains a preamble for identifying the user terminal (also referred to as an "initial signal") in the beginning part (top part) of a UL TTI, and make UL transmission. The radio base station can adequately detect UL transmission (UL burst transmission) by using preambles that are received.

The initial signal may include a preamble formed with an integer number of symbols. In this case, it is possible to make the total of the symbols contained in the initial signal and the symbols contained in one TTI the number of symbols in a normal subframe (for example, 14). When UL transmission is made in one TTI in which an initial signal is included, part of the symbols contained in the UL TTI can be used for the transmission of the preamble. For example, part or the whole of the first symbol in the transmission-starting timing can be used for the initial signal. Alternatively, another symbol (for example, the symbols in which the SRS is arranged) can be used for the initial signal. In this case, it is possible to control the other symbol (SRS symbol) to be allocated at the top of the UL TTI.

Alternatively, it is also possible to employ a structure in which an initial signal to contain a preamble is provided additionally, without changing the structure of UL TTIs. In this case, the actual UL transmission time duration has to be configured several symbols (initial signal) longer than 1 ms.

Furthermore, the initial signal to transmit at the top of UL transmission (UL burst) can be formed with a part that is less than one symbol long and a part that is comprised of an integer number of symbols. According to the present invention, the listening which the user terminal executes before transmitting UL signals is likely to be a time unit (for example, 16 µm) that is shorter than one symbol. Consequently, depending on the result of listening (the timing LBT-idle is yielded), cases might occur where UL transmission is made from the middle of a symbol. In such cases, the initial signal assumes a structure to include a part that is less than one symbol long.

The part comprised of an integer number of symbols can be generated by using the structure of an existing demodulation reference signal (DMRS) and/or a reference signal (SRS) (for example, the sequence and so on). Alternatively, it is equally possible to generate user terminal-specific ones by using sequences that are based on a DMRS and/or an SRS and that are different from the DMRS and/or the SRS that are transmitted in the TTIs in UL transmission (for example, the PUSCH).

Furthermore, when uplink control information (UCI) is multiplexed over an uplink shared channel (PUSCH) and transmitted, it is possible to configure the uplink control information the same as the normal TTI structure (transmission method 1), or configure relative locations with respect to subframe boundaries on a fixed basis (transmission method 2).

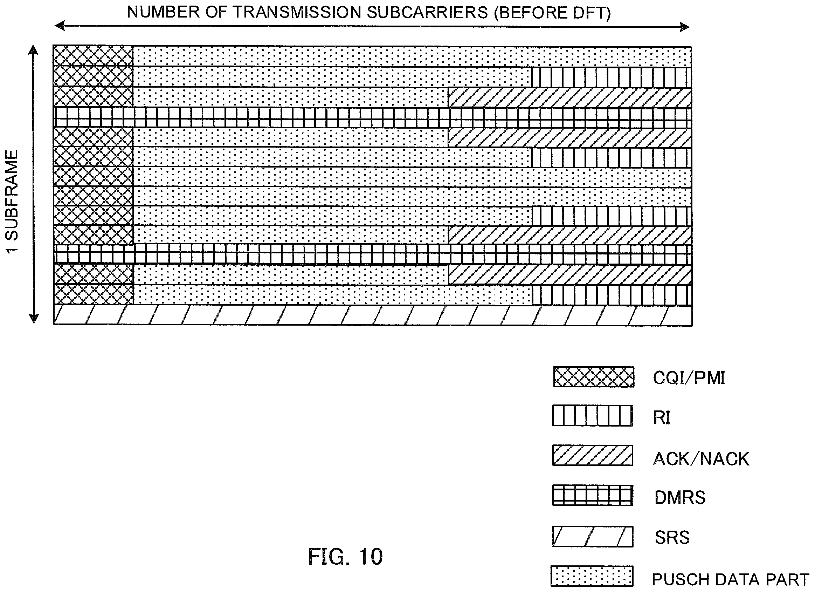

FIG. 10 shows an example of allocation of uplink control information where uplink control information is transmitted by using the PUSCH (before the DFT (Discrete Fourier Transform) process). When transmission method 1 is employed, the user terminal can control the allocation of uplink control information in the PUSCH, as in the normal TTI structure, from the symbol of the transmission-starting timing. When transmission method 2 is employed, the user terminal can control the allocation of every piece of each uplink control information in each symbol where fixed locations with respect to a subframe timing (subframe boundary) are determined.

The user terminal can determine the transmission method to apply to an uplink control channel (for example, the PUCCH) based on the transmission method (transmission method I or transmission method 2) to apply to the allocation of the PUSCH. For example, when the user terminal applies transmission method 1 to the PUSCH, the user terminal can also apply transmission method 1 to the PUCCH, and, furthermore, control the PUCCH to be frequency-division-multiplexed with the PUSCH.

Alternatively, the user terminal may control the transmission method to apply to the PUCCH independently from the transmission method to apply to the PUSCH. For example, the user terminal can apply transmission method 2 to the PUCCH, and apply transmission method 1 to the PUSCH. In this case, the radio base station can assume that the PUCCH always arrives in the state in accordance with the subframe timing, perform the blind detection operation, without performing the preamble detection operation. Furthermore, the user terminal may also apply transmission method 1 to the PUCCH, and apply transmission method 2 to the PUSCH. Note that the user terminal can select the transmission method to apply to the PUCCH and/or the PUSCH based on information reported from the radio base station.

### < Variation >

When a user terminal communicates by connecting with a plurality of CCs, cases might occur where UL transmissions for multiple CCs are configured concurrently. Also, cases might occur where UL transmission timings for multiple CCs vary (for example, between UL transmission that uses a floating TTI in an unlicensed band and UL transmission in a licensed band, and so on). Cases where a user terminal connects with a plurality of CCs and communicates include when carrier aggregation (CA), dual connectivity (DC) and so on are configured.

In DC, cells are run by separate base stations, and user terminals communicate by connecting with cells that are run by different base stations in different frequencies. Consequently, when DC is employed, a plurality of schedulers are provided individually, and these multiple schedulers each control the scheduling of one or more cells (CCs) managed thereunder. Each cell group is comprised of one or plurality of CCs.

In this way, when the UL transmission timing varies between multiple CCs, it is not always the case that all user terminals can support simultaneous UL transmissions of multiple CCs. Consequently, a user terminal can be structured to report, to the radio base stations, information (UE capability information) as to whether or not the user terminal is capable of transmitting UL signals simultaneously even when the actual transmission timing varies between CCs.

Alternatively, a user terminal may be structured to report to the radio base stations that the user terminal is not capable of supporting simultaneous transmissions between CCs with different UL transmission timings (and is capable of supporting simultaneous transmissions only between CCs where the timings matches), as UE capability information. Simultaneous transmissions that take place between CCs with matching timings may be, for example, simultaneous transmissions for CCs belonging to the same timing advance group (TAG).

By learning the user terminal's capability information, the radio base stations can adequately control the scheduling, UL transmission power and so on for user terminals connected with multiple CCs.

Furthermore, a user terminal that supports simultaneous transmissions for CCs with different timings can apply transmission power control methods for use in asynchronous dual connectivity to UL CA in LAA. For example, when UL transmission to employ a UL floating TTI and normal UL transmission in a licensed carrier are configured as simultaneous transmissions, or when UL transmission to employ a UL floating TTI is configured in a plurality of CCs are the same time, the user terminal can use transmission power control methods to use in asynchronous dual connectivity.

As an example of a transmission power control method for use in asynchronous dual connectivity, it is possible to configure the minimum guaranteed power in each cell group, and control the UL transmission power by taking other groups' guaranteed power, allocated power and so on. Furthermore, the user terminal can reserve the minimum guaranteed power for each cell group, and allocate the remaining transmission power (what is left after the minimum guaranteed power is subtracted from the maximum possible transmission power) to the cell groups (CCs) of earlier transmission timings.

When UL transmission to employ a UL floating TTI and normal UL transmission in a licensed carrier are configured as simultaneous transmissions, the user terminal can control the UL transmission power for the cell (or the cell group) that uses the UL floating TTI and the cell (or the cell group) that carries out the normal UL transmission by taking the minimum guaranteed power into consideration.

### (Structure of Radio Communication System)

Now, the structure of the radio communication system will be described below. In this radio communication system, the radio communication methods are employed. Note that the radio communication methods of the above-described examples may be applied individually or may be applied in combination.

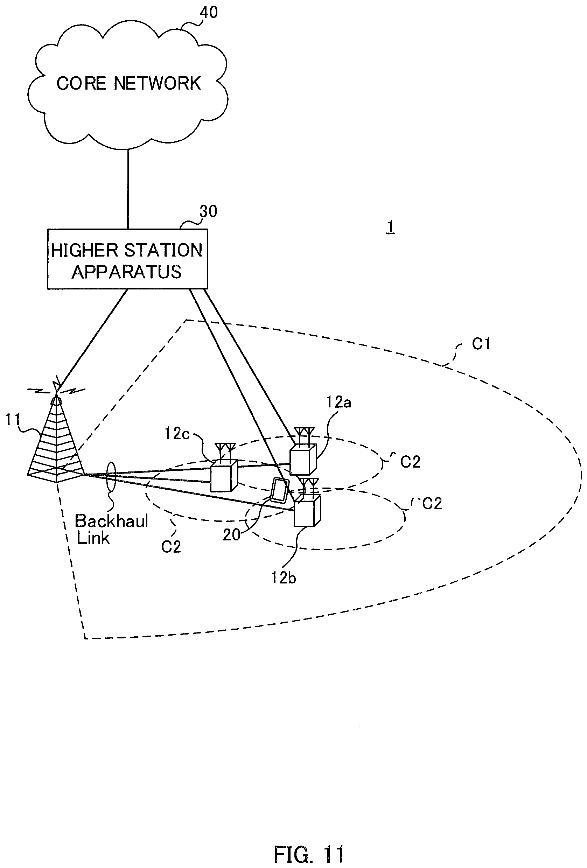

FIG. 11 is a diagram to show an example of a schematic structure of a radio communication system according to an embodiment of the present invention. Note that the radio communication system shown in FIG. 11 is a system to incorporate, for example, an LTE system, super 3G, an LTE-A system and so on. In this radio communication system, carrier aggregation (CA) and/or dual connectivity (DC) to bundle multiple component carriers (CCs) into one can be used. Also, these multiple CCS include licensed band CCs to use licensed bands and unlicensed band CCs to use unlicensed bands may be included. Note that this radio communication system may be referred to as "IMT-Advanced," or may be referred to as "4G," "5G," "FRA" (Future Radio Access) and so on.

The radio communication system 1 shown in FIG. 11 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

### <Radio base station >

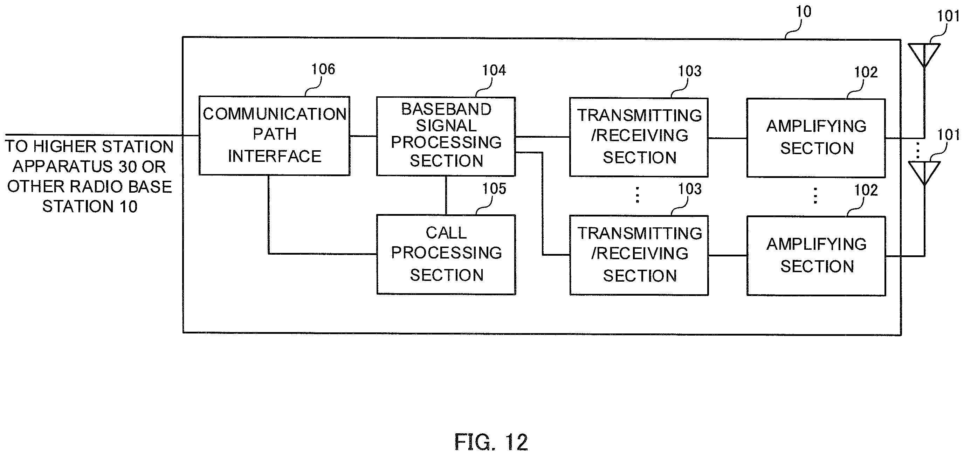

FIG. 12 is a diagram to show an example of an overall structure of a radio base station. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

When DL-LBT that is executed before a DL signal is transmitted yields the result of LBT-idle, the transmitting/receiving sections (transmitting sections) 103 can transmit DL signals in unlicensed bands. Furthermore, the transmitting/receiving sections (transmitting sections) 103 transmit downlink control information, higher layer signaling and so on to the user terminals. Note that, for the transmitting/receiving sections 103, transmitters/receivers, transmitting/receiving circuits or transmitting/receiving devices that can be described based on common understanding of the technical field to which the present invention pertains can be used.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

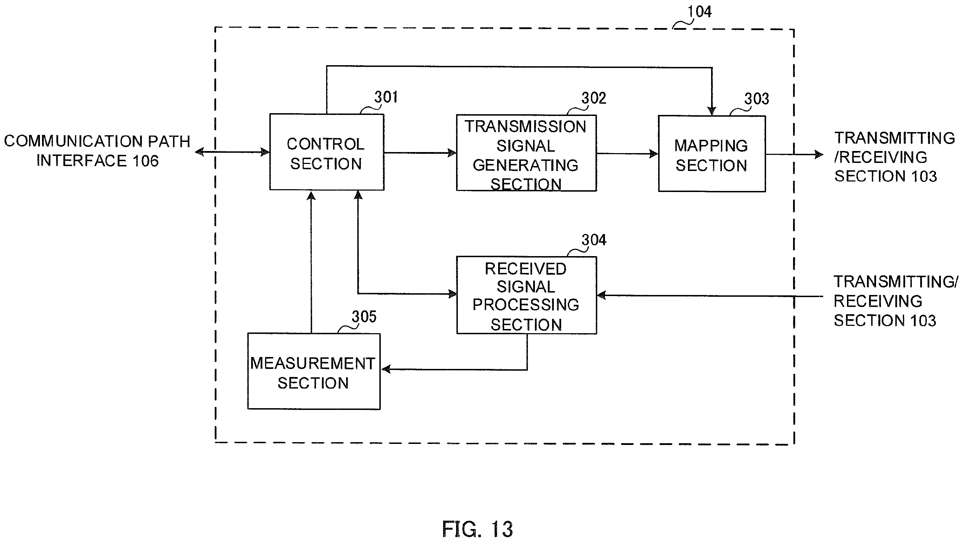

FIG. 13 is a diagram to show an example of a functional structure of a radio base station. Note that, although FIG. 10 primarily shows functional blocks that pertain to characteristic parts of the present example, the radio base station 10 has other functional blocks that are necessary for radio communication as well. As shown in FIG. 13, the baseband signal processing section 104 has a control section (scheduler) 301, a transmission signal generating section (generating section) 302, a mapping section 303, a received signal processing section 304 and a measurement section 305.

The control section (scheduler) 301 controls the scheduling (for example, resource allocation) of downlink data signals that are transmitted in the PDSCH and downlink control signals that are communicated in the PDCCH and/or the EPDCCH. Furthermore, the control section (scheduler) 301 also controls the scheduling of system information, synchronization signals, paging information, CRSs, CSI-RSs and so on.

Also, the control section 301 controls the scheduling of uplink reference signals, uplink data signals that are transmitted in the PUSCH, uplink control signals that are transmitted in the PUCCH and/or the PUSCH, random access preambles that are transmitted in the PRACH, and so on. Also, the control section 301 controls the transmission of DL signal based on the result of listening (DL LBT). DL signals can be transmitted from the middle of subframes. Note that, for the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 to predetermined radio resources based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

The measurement section 305 can measure the received power (for example, the RSRP (Reference Signal Received Power)), the received quality (for example, the RSRQ (Reference Signal Received Quality)), channel states and so on by using the received signals. Also, upon listening before DL signal transmission in unlicensed bands, the measurement section 305 can measure the received power of signals transmitted from other systems and/or the like. The results of measurements in the measurement section 305 are output to the control section 301. The control section 301 can control the transmission of DL signals based on measurement results (listening results) in the measurement section 305.

The measurement section 305 can be constituted by a measurer, a measurement circuit or a measurement device that can be described based on common understanding of the technical field to which the present invention pertains.

### <User terminal >

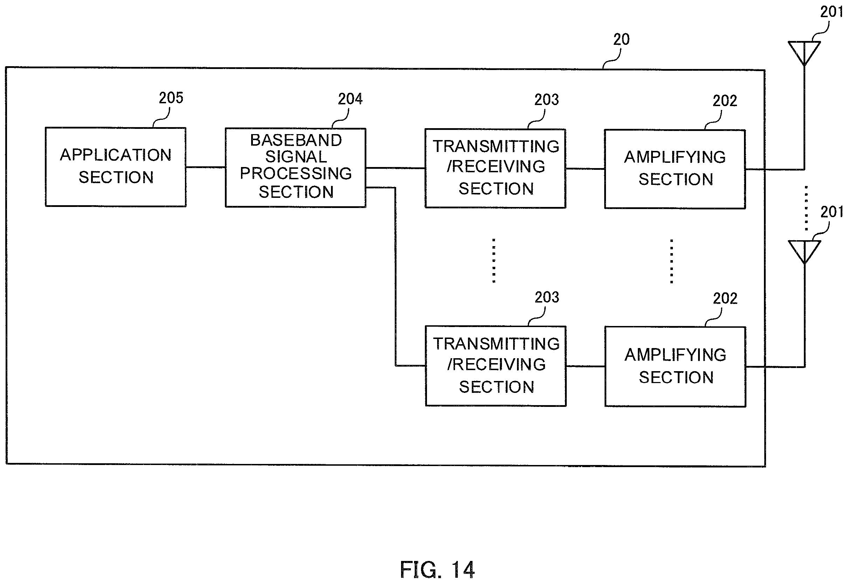

FIG. 14 is a diagram to show an example of an overall structure of a user terminal. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (receiving section) 203 can receive DL signals to command UL transmission in unlicensed bands (for example, UL grants), DL data and so on. Furthermore, the transmitting/receiving sections (receiving sections) 203 can receive information about candidate UL transmission periods. Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

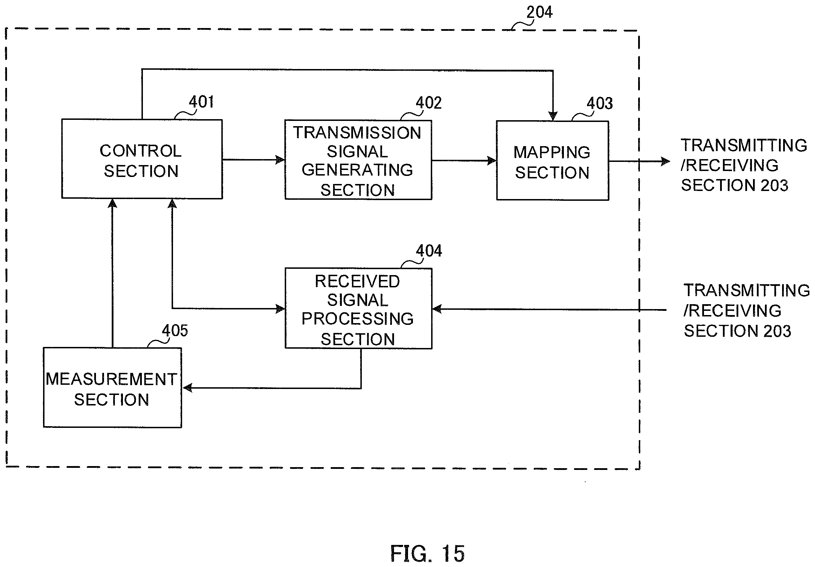

FIG. 15 is a diagram to show an example of a functional structure of a user terminal according to the present embodiment. Note that, although FIG. 15 primarily shows functional blocks that pertain to characteristic parts of the present embodiment, the user terminal 20 has other functional blocks that are necessary for radio communication as well. As shown in FIG. 15, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants) and so on. Also, the control section 401 controls the transmission of UL signals based on the result of listening (UL LBT).

When support is provided for transmitting DL signals and/or UL signals from the middle of a subframe based on the result of listening, the control section 401 can control UL signals to be transmitted within a second period that is configured a first period after a UL transmission command is received (see FIG. 6A). When a DL signal to contain a UL transmission command is transmitted in one subframe, the control section 401 can transmit a UL signal within a second period from the subframe that comes a first period after the subframe in which the UL transmission command is received.

Also, the control section 401 can control one transmission time interval of UL transmission or a plurality of transmission time intervals of UL transmission to be carried out in the second period (see FIG. 6B). When a DL signal to contain a UL transmission command is transmitted over a plurality of subframes, the control section 401 can transmit a UL signal within a second period from the subframe that comes a first period after a specific subframe among the multiple subframe (see FIGs. 7A and 7B).

Furthermore, when a UL signal is transmitted in a transmission time interval unit from the middle of a subframe, the control section 401 can apply the normal TTI structure and control the UL transmission, regardless of the timing the transmission is started, which is determined based on the result of listening (see FIG. 9). Alternatively, when a UL signal is transmitted in a transmission time interval unit from the middle of a subframe, the control section 401 can control the transmission by applying a TTI structure in which relative locations with respect to a subframe boundary are configured on a fixed basis, regardless of the timing the transmission is started, which is determined based on the result of listening (see FIG. 9).

Furthermore, the control section 401 can control UL transmission by including user terminal-specific -initial signals at the top of UL transmission. Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, a mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section.

Also, the measurement section 405 may measure the received power (for example, the RSRP (Reference Signal Received Power)), the received quality (for example, the RSRQ (Reference Signal Received Quality)), channel states and so on, by using the received signals. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

The measurement section 405 can be constituted by a measurer, a measurement circuit or a measurement device that can be described based on common understanding of the technical field to which the present invention pertains.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of radio base stations 10 and user terminals 20 may be implemented using hardware such as ASICs (Application-Specific Integrated Circuits), PLDs (Programmable Logic Devices), FPGAs (Field Programmable Gate Arrays), and so on. Also, the radio base stations 10 and user terminals 20 may be implemented with a computer device that includes a processor (CPU), a communication interface for connecting with networks, a memory and a computer-readable storage medium that holds programs. That is, radio base stations and user terminals function as computers that execute the processes of the radio communication method.

Here, the processor and the memory are connected with a bus for communicating information. Also, the computer-readable recording medium is a storage medium such as, for example, a flexible disk, an opto-magnetic disk, a ROM, an EPROM, a CD-ROM, a RAM, a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The examples/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the examples/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Reference is made to the disclosure of Japanese Patent Application No. 2015-159944, filed on August 13, 2015, including the specification, drawings and abstract.

## Claims

1. A terminal (20) comprising:
a transmission section (203) configured to transmit an uplink, UL, signal;
a control section (401) configured to control transmission of the UL signal based on an UL grant from a radio base station and based on listening that is executed before the UL signal is transmitted,
**characterized in that**
when support is provided to transmit the UL signal from a time point in a symbol based on a result of listening, the time point being a first time length after a start of the symbol, and the first time length being
shorter than a length of the symbol, the transmission section (203) transmits the UL signal from the time point which is a second time after the UL grant is received.

2. A radio communication method for a terminal (20), comprising:
transmitting an uplink, UL, signal;
controlling transmission of the UL signal based on an UL grant from a radio base station and based on listening that is executed before the UL signal is transmitted,
**characterized in that**
when support is provided to transmit the UL signal from a time point in a symbol based on a result of listening, the time point being a first time length after a start of the symbol, and the first time length being shorter than a length of the symbol, transmitting the UL signal from the time point which is a second time after the UL grant is received.

3. A system (1) comprising:
a terminal (20) according to claim 1; and
a base station (10) configured to receive the UL signal.

## Patentansprüche

1. Endgerät (20), umfassend:
einen Sendeabschnitt (203), der ausgelegt ist, um ein Uplink-, UL,-Signal zu senden;
einen Steuerabschnitt (401), der ausgelegt ist, um Übertragung des UL-Signals zu steuern, basierend auf einer UL-Gewährung von einer Funkbasisstation und basierend auf Mithören, das ausgeführt wird, bevor das UL-Signal übertragen wird,
**dadurch gekennzeichnet, dass**, wenn Unterstützung bereitgestellt wird, um das UL-Signal von einem Zeitpunkt in einem Symbol basierend auf einem Mithörergebnis zu übertragen, wobei der Zeitpunkt eine erste Zeitlänge nach einem Beginn des Symbols ist, und die erste Zeitlänge kürzer ist als eine Länge des Symbols, der Sendeabschnitt (203) das UL-Signal von dem Zeitpunkt überträgt, der eine zweite Zeit ist, nachdem die UL-Gewährung empfangen wurde.

2. Funkkommunikationsverfahren für ein Endgerät (20), umfassend:
Übertragen eines Uplink-, UL,-Signals;
Steuern von Übertragung des UL-Signals basierend auf einer UL-Gewährung von einer Funkbasisstation und basierend auf Mithören, das ausgeführt wird, bevor das UL-Signal übertragen wird,
**dadurch gekennzeichnet, dass**, wenn Unterstützung bereitgestellt wird, um das UL-Signal von einem Zeitpunkt in einem Symbol basierend auf einem Mithörergebnis zu übertragen, wobei der Zeitpunkt eine erste Zeitlänge nach einem Beginn des Symbols ist, und die erste Zeitlänge kürzer ist als eine Länge des Symbols, Übertragen des UL-Signals von dem Zeitpunkt erfolgt, der eine zweite Zeit ist, nachdem die UL-Gewährung empfangen wurde.

3. System (1), das umfasst:
ein Endgerät (20) nach Anspruch 1; und
eine Basisstation (10), die ausgelegt ist, um das UL-Signal zu empfangen.

## Revendications

1. Terminal (20) comprenant :
une section de transmission (203) configurée pour transmettre un signal en liaison montante, UL;
une section de commande (401) configurée pour commander la transmission du signal UL sur la base d'une autorisation de liaison montante UL provenant d'une station de base radio et sur la base d'une écoute qui est exécutée avant la transmission du signal UL,
**caractérisé en ce que** lorsqu'une prise en charge est fournie pour transmettre le signal UL à partir d'un point temporel dans un symbole sur la base d'un résultat de l'écoute, le point temporel étant une première longueur temporelle après un début du symbole, et la première longueur temporelle étant plus courte qu'une longueur du symbole, la section de transmission (203) transmet le signal UL à partir du point temporel qui est une seconde période après la réception de l'autorisation UL.

2. Procédé de communication radio pour un terminal (20), comprenant :
la transmission d'un signal en liaison montante, UL;
la commande de la transmission du signal UL sur la base d'une autorisation de liaison montante UL provenant d'une station de base radio et sur la base d'une écoute qui est exécutée avant la transmission du signal UL,
**caractérisé en ce que** lorsqu'une prise en charge est fournie pour transmettre le signal UL à partir d'un point temporel dans un symbole sur la base d'un résultat de l'écoute, le point temporel étant une première longueur temporelle après un début du symbole, et la première longueur temporelle étant plus courte qu'une longueur du symbole, la section de transmission transmet le signal UL à partir du point temporel qui est une seconde période après la réception de l'autorisation UL.

3. Système (1) comprenant :
un terminal (20) selon la revendication 1; et
une station de base (10) configurée pour recevoir le signal UL.
